(19) Europäisches Patentamt
European Patent Office
Office européen des brevets

(11) EP 4 556 512 A1

# (12) EUROPEAN PATENT APPLICATION

(43) Date of publication:
**21.05.2025 Bulletin 2025/21**

(21) Application number: **24208583.5**

(22) Date of filing: **24.10.2024**

(51) International Patent Classification (IPC):
***C08J 5/02*** *(2006.01)* ***B60C 1/00*** *(2006.01)*
***C08L 7/02*** *(2006.01)*

(52) Cooperative Patent Classification (CPC):
**C08J 5/02; B60C 1/00; C08L 7/02;** C08J 2307/02; G01N 24/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.11.2023 JP 2023194502**
**24.11.2023 JP 2023199045**

(71) Applicant: **Sumitomo Rubber Industries, Ltd.**
**Kobe-shi, Hyogo 651-0072 (JP)**

(72) Inventors:
- **HORIE, Miki**
**Kobe-shi, 651-0072 (JP)**
- **FUKUCHI, Masashi**
**Kobe-shi, 651-0072 (JP)**
- **KITAURA, Takehiro**
**Kobe-shi, 651-0072 (JP)**
- **TAKEBE, Asaka**
**Kobe-shi, 651-0072 (JP)**

(74) Representative: **Manitz Finsterwald**
**Patent- und Rechtsanwaltspartnerschaft mbB**
**Martin-Greif-Strasse 1**
**80336 München (DE)**

## (54) VULCANIZED RUBBER COMPOSITION AND METHOD FOR PRODUCING THE SAME, AND METHOD FOR SETTING MEASUREMENT TEMPERATURE AND METHOD FOR MEASURING RESIDUAL DIPOLAR INTERACTION CONSTANT

(57) Provided is a rubber composition with high cross-link homogeneity and a method for producing the rubber composition. The present invention relates to a vulcanized rubber composition obtained by a production method including: base kneading to knead at least one rubber component and at least one vulcanization accelerator; finish kneading to knead kneaded mixture 1 obtained in the base kneading and at least one vulcanizer; and vulcanizing kneaded mixture 2 obtained in the finish kneading.

EP 4 556 512 A1

## Description

### TECHNICAL FIELD

The present invention relates to vulcanized rubber compositions and methods for producing the same, and methods for setting measurement temperatures and methods for measuring residual dipolar interaction constants.

### BACKGROUND ART

Local inhomogeneity of the cross-link densities in vulcanized rubbers is assumed to affect the physical properties of the vulcanized rubbers and tire products. Rubbers with high cross-link homogeneity are expected to be excellent in breaking properties and abrasion resistance. However, analytical techniques which can assess cross-link homogeneity are limited, and there are no quantitative evaluation indicators. Thus, techniques to obtain rubber compositions with homogeneous cross-linking are difficult to provide.

Meanwhile, a technique to measure a residual dipolar interaction constant ($D_{res}$) of a vulcanized diene-based rubber such as NR or SBR at a constant measurement temperature is known. $D_{res}$ is an evaluation indicator of a cross-link density (see, for example, Non-Patent Literature 1) .

### CITATION LIST

- Non-Patent Literature

Non-Patent Literature 1: Macromolecules, US, 2020, 53, pp. 11166-11177

### SUMMARY OF INVENTION

### TECHNICAL PROBLEM

Despite the above-described demand for techniques to homogenize cross-linking, there is no technique to analyze cross-link homogeneity nor evaluation indicators therefor. Thus, such homogenizing techniques are difficult to develop. In particular, a cross-link homogenizing technique commonly usable for various vulcanized rubber compositions has been requested.

The present invention aims to solve the problem and provide a rubber composition with high cross-link homogeneity and a method for producing the rubber composition.

### SOLUTION TO PROBLEM

The present invention relates to a vulcanized rubber composition obtained by a production method including:

base kneading to knead at least one rubber component and at least one vulcanization accelerator;
finish kneading to knead kneaded mixture 1 obtained in the base kneading and at least one vulcanizer; and
vulcanizing kneaded mixture 2 obtained in the finish kneading.

### ADVANTAGEOUS EFFECTS OF INVENTION

The vulcanized rubber composition of the present invention is obtained by a production method including base kneading to knead at least one rubber component and at least one vulcanization accelerator; finish kneading to knead kneaded mixture 1 obtained in the base kneading and at least one vulcanizer; and vulcanizing kneaded mixture 2 obtained in the finish kneading. The present invention can provide a rubber composition with high cross-link homogeneity and a method for producing the rubber composition.

### BRIEF DESCRIPTION OF DRAWINGS

FIG. 1 is a graph showing a multiple quantum build-up curve obtained by a $^1H$ multiple-quantum NMR method.

### DESCRIPTION OF EMBODIMENTS

[Present embodiment]

The present embodiment includes a vulcanized rubber composition (hereinafter, also referred to as "vulcanized rubber composition 1") obtained by a production method (hereinafter, also referred to as "production method 1") including base kneading to knead at least one rubber component and at least one vulcanization accelerator; finish kneading to knead kneaded mixture 1 obtained in the base kneading and at least one vulcanizer; and vulcanizing kneaded mixture 2 obtained in the finish kneading.

The mechanism of the advantageous effect provided by the vulcanized rubber composition 1 is not exactly clear, but it is believed to be as follows.

In a usual kneading process in the production of vulcanized rubbers, sulfur, vulcanization accelerators, and the like are often added in finish kneading from a concern about early vulcanization. In contrast, in the production of the vulcanized rubber composition, a vulcanization accelerator is fed and kneaded in base kneading, so that the vulcanization accelerator is more homogeneously dispersed. Thus, the produced vulcanized rubber composition is considered to have a narrow standard deviation of a residual dipolar coupling constant (hereinafter, also referred to as a residual dipolar interaction constant) and have a more homogeneous cross-link density distribution.

Moreover, the cross-link homogeneity of the vulcanized rubber can be evaluated by measuring a standard deviation of the residual dipolar coupling constant by NMR, for example.

Accordingly, the present embodiment can provide a rubber composition with high cross-link homogeneity and a method for producing the rubber composition. For example, the present embodiment is believed to be able to provide a rubber composition with a narrow standard deviation of a residual dipolar coupling constant determined by NMR and a method for producing the rubber composition.

The vulcanized rubber composition 1 is obtainable by production method 1 including base kneading to knead at least one rubber component and at least one vulcanization accelerator; finish kneading to knead kneaded mixture 1 obtained in the base kneading and at least one vulcanizer; and vulcanizing kneaded mixture 2 obtained in the finish kneading.

The steps in the production method 1 are described in detail below.

(Base kneading in production method 1)

In the base kneading in the production method 1, at least one rubber component and at least one vulcanization accelerator are kneaded.

The at least one rubber component may be entirely (total amount used in all the steps) or partly fed in the base kneading in the production method 1. To better achieve the advantageous effect, 50% by mass or more of the entire amount of all types of rubber components is preferably fed and kneaded in the base kneading in the production method 1. The amount is more preferably 70% by mass or more, still more preferably 90% by mass or more, particularly preferably 100% by mass.

The at least one vulcanization accelerator may be entirely (total amount used in all the steps) or partly fed in the base kneading in the production method 1.

To better achieve the advantageous effect, 50% by mass or more of the entire amount of the at least one vulcanization accelerator is preferably fed and kneaded in the base kneading in the production method 1. The amount is more preferably 70% by mass or more, still more preferably 90% by mass or more, particularly preferably 100% by mass.

To better achieve the advantageous effect, at least a sulfenamide vulcanization accelerator described below is desirably kneaded in the base kneading in the production method 1. In this case, 50% by mass or more of the entire amount (total amount used in all the steps) of the sulfenamide vulcanization accelerator is preferably fed and kneaded. The amount is more preferably 70% by mass or more, still more preferably 90% by mass or more, particularly preferably 100% by mass.

In particular, at least N-cyclohexyl-2-benzothiazolesulfenamide described below is desirably kneaded in the base kneading in the production method 1.

In this case, 50% by mass or more of the entire amount (total amount used in all the steps) of the N-cyclohexyl-2-benzothiazolesulfenamide is preferably fed and kneaded.

The amount is more preferably 70% by mass or more, still more preferably 90% by mass or more, particularly preferably 100% by mass.

The rubber component and the vulcanization accelerator may each be fed all at once or in divided portions. For example, both the rubber component and the vulcanization accelerator may be partially kneaded first and then the remaining portions of them may be kneaded. Alternatively, a part of the rubber component and the entire vulcanization accelerator may be kneaded first and then the remaining portion of the rubber component may be kneaded, or the entire rubber component and a part of the vulcanization accelerator may be kneaded first and then the remaining portion of the vulcanization accelerator may be kneaded.

The kneading in the base kneading in the production method 1 may be performed in one stage or two or more

stages.

In the present embodiment, one-stage kneading refers to a process from feeding and kneading of the components to discharge. Thus, one-stage kneading encompasses the case where the components are fed at different times before discharge.

In the base kneading in the production method 1, at least one rubber component is kneaded.

The rubber component in the present embodiment contributes to cross-linking and generally corresponds to a polymer component which has a weight average molecular weight (Mw) of 10000 or more and which is not extractable with acetone. The rubber component is solid at room temperature (25°C).

The weight average molecular weight of the rubber component is preferably 50000 or more, more preferably 150000 or more, still more preferably 200000 or more, particularly preferably 270000 or more, while it is preferably 2000000 or less, more preferably 1500000 or less, still more preferably 1000000 or less. When the weight average molecular weight is within the range indicated above, the advantageous effect tends to be better achieved.

Herein, the weight average molecular weight (Mw) and number average molecular weight (Mn) can be determined by gel permeation chromatography (GPC) (GPC-8000 series available from Tosoh Corporation, detector: differential refractometer, column: TSKgel SuperMultipore HZ-M available from Tosoh Corporation) and the determined values are calibrated with polystyrene standards.

The rubber component may be either an unmodified rubber or a modified rubber.

The modified rubber may be a rubber having a functional group interactive with a filler such as silica. Examples include a chain end-modified rubber obtained by modifying at least one chain end of a rubber with a compound (modifier) having the above functional group (i.e., a chain end-modified rubber terminated with the functional group); a backbone-modified rubber having the functional group in the backbone; a backbone- and chain end-modified rubber having the functional group in both the backbone and a chain end (e.g., a backbone- and chain end-modified rubber in which the backbone has the functional group and at least one chain end is modified with the modifier); and a chain end-modified rubber into which a hydroxy or epoxy group has been introduced by modification (coupling) with a polyfunctional compound having two or more epoxy groups in the molecule.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may be substituted. Preferred among these are an amino group (preferably an amino group whose hydrogen atom is replaced with a C1-C6 alkyl group), an alkoxy group (preferably a C1-C6 alkoxy group), and an alkoxysilyl group (preferably a C1-C6 alkoxysilyl group).

Examples of the rubber component include diene-based rubbers. Examples of diene-based rubbers include isoprene-based rubbers, polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR). Examples of the rubber component also include butyl-based rubbers and fluororubbers. Modified or hydrogenated products of these rubber components are also usable. Rubbers extended with oils, resins, liquid rubber components, etc. are usable as well. Each of these may be used alone or in combinations of two or more thereof. Of these, the rubber component preferably includes at least one of an isoprene-based rubber, BR, and SBR, more preferably includes at least SBR, and still more preferably includes at least an isoprene-based rubber, BR, and SBR.

Examples of the isoprene-based rubber include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers. Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. Each of these may be used alone or in combinations of two or more thereof.

Any BR may be used, and examples include high-cis BR having a high cis content, BR containing syndiotactic polybutadiene crystals, and BR synthesized using rare earth catalysts (rare earth-catalyzed BR). Each of these may be used alone or in combinations of two or more thereof. In particular, the BR preferably includes high-cis BR having a cis content of 90% by mass or higher. The cis content is more preferably 95% by mass or higher. Here, the cis content can be measured by infrared absorption spectrometry.

When one type of BR is used, the cis content of the BR refers to the cis content of the one BR, while when multiple types of BR are used, it refers to the average cis content.

The average cis content of the BR can be calculated using the equation: {$\Sigma$(amount of each BR $\times$ cis content of the each BR)}/amount of total BR. For example, when 100% by mass of rubber components include 20% by mass of BR having a cis content of 90% by mass and 10% by mass of BR having a cis content of 40% by mass, the average cis content

of the BR is 73.3% by mass (= (20 × 90 + 10 × 40)/(20 + 10)).

The BR may be either an unmodified BR or a modified BR. Examples of the modified BR include those into which the functional groups listed for the modified rubbers have been introduced. The BR may also be hydrogenated polybutadiene polymers (hydrogenated BR).

Examples of usable BR include BR products available from Ube Industries, Ltd., JSR Corporation, Asahi Kasei Corp., Zeon Corporation, etc.

Any SBR may be used. Examples include emulsion-polymerized styrene-butadiene rubbers (E-SBR) and solution-polymerized styrene-butadiene rubbers (S-SBR). Each of these may be used alone or in combinations of two or more thereof.

The styrene content of the SBR is preferably 5% by mass or higher, more preferably 20% by mass or higher, still more preferably 24% by mass or higher. The styrene content is preferably 60% by mass or lower, more preferably 40% by mass or lower, still more preferably 35% by mass or lower. When the styrene content is within the range indicated above, the advantageous effect tends to be better achieved.

Herein, the styrene content can be measured by $^{1}$H-NMR analysis.

When one type of SBR is used, the styrene content of the SBR refers to the styrene content of the one SBR, while when multiple types of SBR are used, it refers to the average styrene content.

The average styrene content of the SBR can be calculated using the equation: {Σ(amount of each SBR × styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85 × 40 + 5 × 25)/(85 + 5)) .

The vinyl bond content of the SBR is preferably 3% by mass or higher, more preferably 10% by mass or higher, still more preferably 17% by mass or higher. The vinyl bond content is preferably 50% by mass or lower, more preferably 40% by mass or lower, still more preferably 30% by mass or lower. When the vinyl bond content is within the range indicated above, the advantageous effect tends to be better achieved.

Herein, the vinyl bond content (1,2-butadiene unit content) can be measured by infrared absorption spectrometry.

The vinyl content (1,2-butadiene unit content) of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl content of the SBR refers to the vinyl content of the one SBR, while when multiple types of SBR are used, it refers to the average vinyl content.

The average vinyl content of the SBR can be calculated using the equation: Σ{amount of each SBR × (100 (% by mass) - styrene content (% by mass) of the each SBR) × vinyl content (% by mass) of the each SBR}/Z{amount of each SBR × (100 (% by mass) - styrene content (% by mass) of the each SBR)}. For example, when 100 parts by mass of rubber components include 75 parts by mass of SBR having a styrene content of 40% by mass and a vinyl content of 30% by mass, 15 parts by mass of SBR having a styrene content of 25% by mass and a vinyl content of 20% by mass, and the remaining 10 parts by mass of a rubber component other than SBR, the average vinyl content of the SBR is 28% by mass (= {75 × (100 (% by mass) - 40 (% by mass)) × 30 (% by mass) + 15 × (100 (% by mass) - 25 (% by mass)) × 20 (% by mass)}/{75 × (100 (% by mass) - 40 (% by mass)) + 15 × (100 (% by mass) - 25 (% by mass))}.

The SBR may be either an unmodified SBR or a modified SBR. Examples of the modified SBR include those into which the functional groups listed for the modified rubbers have been introduced. The SBR may also be hydrogenated styrene-butadiene copolymers (hydrogenated SBR).

The SBR may be a SBR product manufactured or sold by Sumitomo Chemical Co., Ltd., JSR Corporation, Asahi Kasei Corp., Zeon Corporation, etc. or maybe SBR synthesized by a known method.

The materials (monomers) of synthetic rubbers such as SBR and BR may be derived from petroleum or may be recycled from rubber products such as tires or non-rubber products such as polystyrene. Non-limiting examples of monomers obtained by recycle (recycled monomers) include butadiene derived from recycled materials and aromatic vinyls derived from recycled materials. Examples of the butadiene include 1,2-butadiene and 1,3-butadiene. Non-limiting examples of the aromatic vinyls include styrene. Of these, butadiene derived from recycled materials (recycled butadiene) and /or styrene derived from recycled materials (recycled styrene) are/is preferably used as a raw material.

The recycled monomers may be produced by any method. For example, a recycled monomer may be synthesized from naphtha derived from a recycled material obtained by decomposing a rubber product such as a tire. The naphtha derived from a recycled material may be produced by any method, for example, by decomposing a rubber product such as a tire at a high temperature and a high pressure, by microwave decomposition, or by mechanical grinding and subsequent extraction.

The raw materials (monomers) of a synthetic rubber such as SBR or BR may be derived from biomass. Non-limiting examples of biomass-derived monomers (biomass monomers) include biomass-derived butadiene and biomass-derived aromatic vinyls. Examples of the butadiene include 1,2-butadiene and 1,3-bitadiene. Non-limiting examples of the

aromatic vinyls include styrene. Biomass monomers may be produced by any method, for example, a method including at least one of biological conversion, chemical conversion, or physical conversion of an animal or a plant. The biological conversion is typically fermentation by microorganisms. The chemical and/or physical conversion can be caused by, for example, a catalyst, a high temperature, a high pressure, electromagnetic waves, a critical liquid, or a combination of these. Examples of the biomass resources of the monomers include sugar, wood, plant residues after collecting useful components, plant-derived ethanol, and biomass naphtha.

Non-limiting examples of polymers (biomass polymers) synthesized using a biomass monomer component include polybutadiene rubbers synthesized using biomass-derived butadiene and aromatic vinyl-butadiene copolymers synthesized using biomass-derived butadiene and/or a biomass-derived aromatic vinyl. Examples of the aromatic vinyl-butadiene copolymer include styrene-butadiene rubber synthesized using biomass-derived butadiene and/or a biomass-derived styrene.

Whether the material of a polymer is derived from biomass can be judged by the percent Modern Carbon (pMC) measured in accordance with ASTM D6866-10.

The term "pMC" refers to the ratio of the $^{14}C$ content of a sample to that of a modern carbon standard (modern standard reference). This value is used as an index indicative of the biomass ratio of a compound (rubber). The following will describe what this value means.

One mole of carbon atoms ($6.02 \times 10^{23}$ carbon atoms) includes about $6.02 \times 10^{11}$ $^{14}C$ atoms (about one trillionth of the number of normal carbon atoms). $^{14}C$ is called a radioactive isotope and its half-life period is 5730 years and the number thereof regularly decreases. Decay of all the $^{14}C$ atoms requires 226000 years. This means that in the fossil fuels, such as coal, petroleum, and natural gas, which are considered to have existed for at least 226000 years after carbon dioxide and the like in the air were taken into and fixed in plants, etc., all the $^{14}C$ atoms which had been contained in the plants etc. at the beginning of the fixation were decayed. Therefore, in the current 21st century, the fossil fuels, such as coal, petroleum, and natural gas, contain no $^{14}C$ atoms. Thus, chemical materials prepared from such fossil fuel raw materials contain no $^{14}C$ atoms either.

Meanwhile, $^{14}C$ is unceasingly generated by nuclear reaction of cosmic rays in the air, and this generation balances with the $^{14}C$ reduction due to radioactive decay. Thus, in the global atmosphere, the amount of $^{14}C$ is constant. Then, the $^{14}C$ content of materials derived from biomass resources which are circulating in the current environment is about $1 \times 10^{-12}$ mol% of the total of C atoms as described above. Therefore, the difference in the values can be used to calculate the percentages (biomass ratios) of compounds derived from natural resources (compounds derived from biomass resources) in a compound (rubber).

The amount of $^{14}C$ is generally determined as follows. $^{13}C$ content ($^{13}C/^{12}C$) and $^{14}C$ content ($^{14}C/^{12}C$) are determined by tandem accelerator-based mass spectrometry. In the determination, the $^{14}C$ content of the natural carbon cycle at 1950 is used as a modern standard reference, that is, a standard $^{14}C$ content. The particular standard substance used is an oxalic acid standard offered by the National Institute of Standards and Technology (NIST), United States. The specific radioactivity of carbon (intensity of radioactivity of $^{14}C$ per gram of carbon) in the oxalic acid is corrected for carbon isotopic fractionation to a certain value for $^{13}C$, and is then corrected for decay between 1950 AD and the measurement date. This corrected value is taken as the standard $^{14}C$ content (100%). The ratio between this value and the actual measurement value of a sample is defined as pMC.

Thus, a rubber which is 100% produced from materials derived from biomass (natural materials) is expected to have about 110 pMC though there are some differences such as regional differences (currently, such materials often do not exhibit a value of 100 in usual states). On the other hand, a measured $^{14}C$ content of chemical materials derived from fossil fuels, such as petroleum, is expected to be substantially 0 pMC (for example, 0.3 pMC). This value corresponds to a biomass ratio of 0% mentioned above.

Based on the above discussion, materials such as rubbers with a high pMC, i.e., materials such as rubbers with a high biomass ratio can suitably be used in the rubber composition for environmental protection.

In the base kneading in the production method 1, at least one vulcanization accelerator is kneaded.

Any generally used vulcanization accelerator may be usable as the vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl) thiuram disulfide (TOT-N); sulfenamide vulcanization accelerators such as N-cyclohexyl-2-benzothiazolesulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Each of these may be used alone or in combinations of two or more thereof.

To better achieve the advantageous effect, sulfenamide vulcanization accelerators are preferred, and N-cyclohexyl-2-benzothiazolsulfenamide is more preferred among the vulcanization accelerators.

The amount of the vulcanization accelerator fed in the base kneading in the production method 1 per 100 parts by mass of the fed rubber component is preferably 0.1 parts by mass or more, more preferably 1.0 parts by mass or more, still

more preferably 2.0 parts by mass or more, particularly preferably 2.4 parts by mass or more, while it is preferably 20.0 parts by mass or less, more preferably 5.0 parts by mass or less, still more preferably 3.0 parts by mass or less. When the amount is within the range indicated above, the advantageous effect tends to be better achieved.

In addition to the rubber component and the vulcanization accelerator, different components may be fed and kneaded in the base kneading in the production method 1. Examples of the different components other than the rubber component and the vulcanization accelerator include fillers, silane coupling agents, plasticizers, antioxidants, stearic acid, zinc oxide, and wax.

The different components other than the rubber component and the vulcanization accelerator may each be entirely (total amount used in all the steps) or partly fed in the base kneading in the production method 1. To better achieve the advantageous effect, the different components are each preferably fed and kneaded in an amount of 50% by mass or more relative to the entire amount of all types of rubber components in the base kneading in the production method 1. The amount is more preferably 70% by mass or more, still more preferably 90% by mass or more, particularly preferably 100% by mass.

The filler is not limited and may be a material known in the rubber field. Examples include inorganic fillers such as carbon black, silica, calcium carbonate, talc, alumina, clay, aluminum hydroxide, aluminum oxide, and mica; bio char; and hard-to-disperse fillers. To better achieve the advantageous effect, carbon black and silica are preferred among these.

Non-limiting examples of carbon black include N134, N110, N220, N234, N219, N339, N330, N326, N351, N550, and N762. The material of the carbon black may be a biomass material such as lignin or a plant oil or may be a pyrolysis oil obtained by pyrolyzing waste tires. The carbon black may be produced through combustion, for example, by the furnace method, through hydrothermal carbonization (HTC), or through thermal decomposition of methane, for example, by the thermal black method. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. Each carbon black may be used alone or in combinations of two or more thereof.

The nitrogen adsorption specific surface area ($N_2SA$) of the carbon black is preferably 5 $m^2/g$ or more, more preferably 50 $m^2/g$ or more, still more preferably 80 $m^2/g$ or more. The $N_2SA$ is preferably 200 $m^2/g$ or less, more preferably 150 $m^2/g$ or less, still more preferably 120 $m^2/g$ or less. When the $N_2SA$ is within the range indicated above, the advantageous effect tends to be better achieved.

The nitrogen adsorption specific surface area of the carbon black is measured in accordance with JIS K 6217-2:2001.

Non-limiting examples of silica include silica usually used in the tire industry, such as silica (anhydrous silica) prepared by a dry process and silica (hydrous silica) prepared by a wet process. The raw material of the silica is not limited and may be a raw material derived from minerals such as quartz or a raw material derived from a biological resource such as chaff (for example, silica made of a biomass material such as chaff as a raw material). The silica may be silica recycled from a silica-containing product. Preferred among these are hydrous silica prepared by a wet process because it has a large number of silanol groups. Each of the silica may be used alone or two or more of these may be used in combination.

The silica made of a biomass material as a raw material can be obtained by, for example, extracting a silicate using a sodium hydroxide solution from chaff ash obtained by burning chaff, subsequently, as in silica produced in a conventional wet process, reacting the silicate with sulfuric acid to precipitate silicon dioxide, and then subjecting the precipitated silicon dioxide to filtration, water washing, drying, and grinding.

The silica recycled from a silica-containing product may be silica recovered from a silica-containing product such as an electronic component of a semiconductor, a tire, a drying agent, or a filtering material such as diatomite. Non-limiting examples of the recovering method include thermal decomposition and decomposition by electromagnetic waves. Preferred among these is silica recovered from an electronic component of a semiconductor or a tire.

Since crystalline silica does not dissolve in water, silicic acid contained in crystalline silica cannot be utilized. Crystallization of silica in chaff ash can be suppressed by controlling the combustion temperature and the duration of combustion (see JP 2009-2594 A, Akita Prefectural University Web Journal B/2019, vol.6, pp. 216-222, etc.).

Amorphous silica extracted from chaff may be commercially available from Wilmar, etc.

The nitrogen adsorption specific surface area ($N_2SA$) of the silica is preferably 50 $m^2/g$ or more, more preferably 70 $m^2/g$ or more, still more preferably 80 $m^2/g$ or more. The upper limit of the $N_2SA$ of the silica is not limited, and it is preferably 350 $m^2/g$ or less, more preferably 300 $m^2/g$ or less, still more preferably 250 $m^2/g$ or less. When the $N_2SA$ is within the range indicated above, the advantageous effect tends to be better achieved.

Here, the $N_2SA$ of the silica is measured by the BET method in accordance with ASTM D3037-93.

The silane coupling agent is not limited, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. Each of these may be used alone or in combinations of two or more thereof.

Herein, the term "plasticizer" refers to a material that imparts plasticity to rubber components and conceptually includes both liquid (in a liquid state) plasticizers which are liquid at room temperature (25°C) and solid plasticizers which are solid at room temperature (25°C). Examples of the plasticizer include resin components, oils, liquid polymers, and ester plasticizers. These plasticizers may be derived from petroleum, biomass, or naphtha recycled from rubber products or non-rubber products. Usable plasticizers also include low molecular weight hydrocarbon components obtained by subjecting used tires or products containing various components to pyrolysis and extraction. Each of these plasticizers may be used alone or in combinations of two or more.

Specific examples of plasticizers include oils, liquid polymers, and resins. Each of these may be used alone or in combinations of two or more thereof.

Examples of oils include process oils, plant oils, and animal oils. Examples of process oils include paraffinic process oils (mineral oils), naphthenic process oils, and aromatic process oils. Specific examples of process oils include mild extract solvates (MES), distillate aromatic extracts (DAE), treated distillate aromatic extracts (TDAE), treated residual aromatic extracts (TRAE), and residual aromatic extracts (RAE). For environmental protection, process oils with a low polycyclic aromatic compound (PCA) content may be used. Examples of the process oils with a low PCA content include MES, TDAE, and heavy naphthenic oils. In view of life cycle assessment, oils obtained by purifying waste oils used in rubber mixing machines or engines or waste cooking oils used in cooking establishments may be used.

Herein, examples of plant oils include linseed oil, rapeseed oil, safflower oil, soybean oil, corn oil, cotton seed oil, rice oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan tallow. Examples of plant oils also include refined oils (e.g., salad oil) produced by refining the above-mentioned oils, esterified oils produced by esterifying the above-mentioned oils, hardened oils produced by hydrogenation of the above-mentioned oils, thermally polymerized oils produced by thermal polymerization of the above-mentioned oils, oxidized polymerized oils produced by oxidizing the above-mentioned oils, and waste edible oils recovered from used edible oils or the like. The plant oils may be liquid or solid at room temperature (25°C). Each of these plant oils may be used alone or in combinations of two or more thereof.

The plant oils according to the present embodiments each preferably contain acylglycerol and more preferably contain triacylglycerol. Herein, the term "acylglycerol" refers to a compound in which hydroxy groups of glycerol are ester-bonded to a fatty acid. Non-limiting examples of the acylglycerol include 1-monoacylglycerol, 2-monoacylglycerol, 1,2-diacylglycerol, 1,3-diacylglycerol, and triacylglycerol. Moreover, the acylglycerol may be a monomer, a dimer, or a trimer or higher multimer. A dimer or higher multimer acylglycerol may be obtained by thermal polymerization or oxidation polymerization, for example. The acylglycerol may be liquid or solid at room temperature (25°C).

Whether a rubber composition contains the acylglycerol may be examined by any method such as $^1$H-NMR analysis. For example, a rubber composition containing triacylglycerol is immersed in deuterium chloroform at room temperature (25°C) for 24 hours. After removing the rubber composition, the $^1$H-NMR is measured at room temperature. Signals observed at around 5.26 ppm, around 4.28 ppm, and around 4.15 ppm, each referenced to the signal of tetramethylsilane (TMS) taken as 0.00 ppm, are assumed as the signals of hydrogen atoms bound to the carbon atoms adjacent to the oxygen atoms of ester groups. The term "around" in this paragraph refers to a range of $\pm$ 0.10 ppm.

The fatty acid is not limited and may be an unsaturated fatty acid or a saturated fatty acid. Examples of the unsaturated fatty acid include monounsaturated fatty acids such as oleic acid and polyunsaturated fatty acids such as linoleic acid and linolenic acid. Examples of the saturated fatty acid include butyric acid and lauric acid.

Of these fatty acids, fatty acids with few double bonds, specifically saturated fatty acids or monounsaturated fatty acids are desirable, and oleic acid is preferred. Examples of usable plant oils containing such fatty acids include plant oils containing saturated fatty acids or monounsaturated fatty acids and plant oils modified by transesterification or the like. Plants may be improved by breed improvement, genetic modification, genome editing, etc. to produce plant oils containing such fatty acids.

Usable oils may be commercial products available from Idemitsu Kosan Co., Ltd., Sankyo Yuka Kogyo K.K., ENEOS Corporation, Olisoy, H&R, Hokoku Corporation, Fuji Kosan Co., Ltd., Nisshin Oillio Group, etc.

Examples of the liquid polymers include liquid diene polymers (liquid rubbers) and liquid farnesene polymers, all of which are liquid at 25°C. Examples of liquid rubbers include liquid styrene-butadiene copolymers (liquid SBR), liquid

butadiene polymers (liquid BR), liquid isoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). A chain end or the backbone of these may be modified with a polar group. Hydrogenated products of these are also usable.

The weight average molecular weight (Mw) of the liquid diene polymers is preferably $1.0 \times 10^3$ to $5.0 \times 10^4$, more preferably $3.0 \times 10^3$ to $1.5 \times 10^4$ as measured by gel permeation chromatography (GPC) and calibrated with polystyrene standards. The lower limit of the Mw of the liquid diene polymers may be 4500 or 8500, and the upper limit may be 4500 or 8500.

Herein, the Mw of the liquid diene polymers is measured by gel permeation chromatography (GPC) and calibrated with polystyrene standards.

Usable liquid diene polymers may be commercially available from Sartomer, Kraray, etc.

The resins may be resins which are usually used as additives for tires. They may be either liquid or solid at room temperature (25°C). Examples include aromatic vinyl polymers, coumarone-indene resins, coumarone resins, indene resins, phenol resins, rosin resins, petroleum resins, terpene resins, and acrylic resins. The resins may be those hydrogenated (hydrogenated resins). Each of these may be used alone or in combinations of two or more thereof. The resins themselves may be copolymers of different monomers. Aromatic vinyl polymers, petroleum resins, terpene resins, and hydrogenated products of these polymers and resins are desirable among these.

The softening point of the resins which are solid at room temperature, if used, is preferably 50°C or higher, more preferably 55°C or higher, still more preferably 60°C or higher, particularly preferably 85°C or higher, while it is preferably 160°C or lower, more preferably 150°C or lower, still more preferably 140°C or lower, particularly preferably 100°C or lower. When the softening point is within the range indicated above, the advantageous effect tends to be better achieved.

The softening point of the resins which are liquid at room temperature is preferably 20°C or lower, 10°C or lower, or 0°C or lower.

Hydrogenated resins desirably have a softening point within the range indicated above.

The softening point of the resins is determined in accordance with JIS K 6220-1:2001 using a ring and ball softening point measuring apparatus. The temperature at which the ball drops down is defined as the softening point.

The aromatic vinyl polymers refer to polymers containing aromatic vinyl monomers as structural units. Examples include resins produced by polymerization of α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, C9/DCPD resins, and hydrogenated products of these resins. DCPD resins, hydrogenated DCPD resins, C9/DCPD resins, and C9/hydrogenated DCPD resins are preferred among these.

The terpene resins refer to polymers containing terpene as structural units. Examples include polyterpene resins produced by polymerizing terpene compounds and aromatic modified terpene resins produced by polymerizing terpene compounds and aromatic compounds. Examples of usable aromatic modified terpene resins include terpene-phenol resins made from the terpene compounds and phenolic compounds, terpene-styrene resins made from the terpene compounds and styrene compounds, and terpene-phenol-styrene resins made from the terpene compounds, phenolic compounds, and styrene compounds. Examples of the terpene compounds include α-pinene and β-pinene. Examples of the phenolic compounds include phenol and bisphenol A. Examples of the aromatic compounds include styrene compounds such as styrene and α-methylstyrene. Aromatic modified terpene resins are preferred among these.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitably usable among these.

The resins may be commercially available from, for example, Maruzen Petrochemical Co., Ltd., Sumitomo

Bakelite Co., Ltd., Yasuhara Chemical Co., Ltd., Tosoh Corporation, Rutgers Chemicals, BASF, Arizona Chemical, ExxonMobil, KRATON, Nitto Chemical Co., Ltd., Nippon Shokubai Co., Ltd., ENEOS Corporation, Arakawa Chemical Industries, Ltd., Taoka Chemical Co., Ltd., etc.

Desirable plasticizers in view of sustainability are plant-derived plasticizers such as the plant-derived oils and farnesene polymers.

The term "farnesene polymer" refers to a polymer that is produced by polymerizing farnesene and contains a farnesene-based structural unit. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

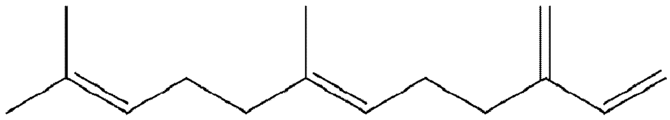

The farnesene polymers may be either homopolymers of farnesene (farnesene homopolymers) or copolymers of farnesene and vinyl monomers (farnesene-vinyl monomer copolymers). Each of these may be used alone or in combinations of two or more thereof. Copolymers of farnesene and vinyl monomers are preferred among these.

Examples of the vinyl monomers include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes, and conjugated diene compounds such as butadiene and isoprene. Each of these may be used alone or in combinations of two or more thereof. Butadiene is preferred among these. In other words, copolymers of farnesene and butadiene (farnesene-butadiene copolymers) are preferred among the farnesene-vinyl monomer copolymers.

The copolymerization ratio of farnesene and vinyl monomers (farnesene/vinyl monomers) of the farnesene-vinyl monomer copolymers is preferably 40/60 to 90/10 by mass.

Farnesene polymers having a weight average molecular weight (Mw) of 3000 to 300000 may be suitably used. The Mw of the farnesene polymers is preferably 8000 or more, more preferably 10000 or more, while it is preferably 100000 or less, more preferably 60000 or less, still more preferably 50000 or less. When the weight average molecular weight is within the range indicated above, the advantageous effect tends to be better achieved.

Farnesene polymers which are either liquid or solid at room temperature (25°C) may be used. Of these, liquid farnesene polymers which are liquid at room temperature (25°C) are desirable.

Non-limiting examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline antioxidants such as polymerized 2,2,4-trimethyl-1,2-dihydroquinoline; monophenolic antioxidants such as 2,6-dit-butyl-4-methylphenol and styrenated phenol; and bis-, tris-, or polyphenolic antioxidants such as tetrakis[methylene-3-(3' ,5'-di-t-butyl-4'-hydroxyphenyl)propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, etc.

Conventionally known stearic acid may be used, including, for example, those available from NOF Corporation, Kao Corporation, FUJIFILM Wako Pure Chemical Corporation, Chiba Fatty Acid Co., Ltd., etc.

Conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The wax is not limited. Any wax usually used in the tire industry may be suitably used. Examples include petroleum waxes, mineral waxes, synthetic waxes, and plant-derived waxes. Petroleum waxes and plant-derived waxes are preferred, with petroleum waxes being more preferred. Examples of plant-derived waxes include rice waxes, carbana waxes, and candelilla waxes. Examples of petroleum waxes include paraffin waxes and microcrystalline waxes as well as selected special waxes thereof. Paraffin waxes are preferred. According to the present embodiments, waxes do not include stearic acid. Usable commercial products of waxes are available from Ouchi Shinko Chemical Industrial Co., Ltd.,

Nippon Seiro Co., Ltd., Paramelt, etc. Each of these waxes may be used alone or in combinations of two or more thereof.

The method of kneading in the base kneading in the production method 1 is not limited. For example, a known kneading machine such as a Banbury mixer or a kneader may be used. The duration of the kneading (duration of the kneading in the whole base kneading) is preferably 3 to 20 minutes, and the kneading temperature is preferably 130°C to 160°C.

(Finish kneading in production method 1)

In the finish kneading in the production method 1, kneaded mixture 1 obtained in the base kneading and a vulcanizer are kneaded.

The vulcanizer kneaded in the finish kneading in the production method 1 may be any chemical capable of cross-linking rubber components, and examples include sulfur. A hybrid cross-linking agent (organic cross-linking agent) is also usable as a vulcanizer in the present embodiment. The vulcanizer may be used alone or in combinations of two or more thereof. Sulfur is preferred among these.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. Each of these may be used alone or in combinations of two or more thereof.

The vulcanizer may be entirely (total amount used in all the steps) or partly fed in the finish kneading in the production method 1.

To better achieve the advantageous effect, 50% by mass or more of the entire amount of the vulcanizer is fed and kneaded in the finish kneading in the production method 1. The amount is more preferably 70% by mass or more, still more preferably 90% by mass or more, particularly preferably 100% by mass.

The sulfur may be entirely (total amount used in all the steps) or partly fed in the finish kneading in the production method 1.

To better achieve the advantageous effect, 50% by mass or more of the entire amount of the sulfur is fed and kneaded in the finish kneading in the production method 1. The amount is more preferably 70% by mass or more, still more preferably 90% by mass or more, particularly preferably 100% by mass.

Different components other than the vulcanizer may be fed and kneaded in the finish kneading in the production method 1. Examples of the different components other than the vulcanizer include vulcanization accelerators excluding those kneaded in the base kneading.

The vulcanization accelerator other than those kneaded in the base kneading may be entirely (total amount used in all the steps) or partly fed in the finish kneading in the production method 1.

To better achieve the advantageous effect, 50% by mass or more of the entire amount of the vulcanization accelerator other than those kneaded in the base kneading is fed and kneaded in the finish kneading in the production method 1. The amount is more preferably 70% by mass or more, still more preferably 90% by mass or more, particularly preferably 100% by mass.

The method of kneading in the finish kneading in the production method 1 is not limited. For example, a known kneading machine such as an open roll mill may be used. The duration of the kneading is preferably 1 to 15 minutes, and the kneading temperature is preferably 80°C to 120°C.

(Vulcanization in production method 1)

In the vulcanization in the production method 1, kneaded mixture 2 obtained in the finish kneading is vulcanized.

In the vulcanization, a kneaded mixture (unvulcanized rubber composition) obtained in the finish kneading is vulcanized.

The vulcanization usually includes a vulcanization treatment such as press vulcanization, thereby obtaining a vulcanized rubber composition (rubber composition having undergone vulcanization). The vulcanization temperature is usually 120°C to 200°C, preferably 140°C to 180°C. The duration of the vulcanization is usually 1 to 30 minutes, preferably 5 to 15 minutes.

For example, the vulcanization includes extruding and processing the unvulcanized rubber composition into the shape of a tire component such as a tread, molding the processed product on a tire building machine by a usual method, assembling the molded product with other tire components to form an unvulcanized tire, and heating and pressurizing the unvulcanized tire in a vulcanizer. Accordingly, a tire can be produced.

The vulcanized rubber composition (rubber composition having undergone vulcanization) of the present embodiment can be obtained by production method 1 including the base kneading, the finish kneading, and the vulcanization.

When the rubber composition obtained by the production method 1 contains an isoprene-based rubber as a rubber component, the amount of the isoprene-based rubber based on 100% by mass of the rubber component is preferably 5% by mass or more, more preferably 10% by mass or more, still more preferably 12% by mass or more, while it is preferably 60% by mass or less, more preferably 50% by mass or less, still more preferably 40% by mass or less. When the amount is within the range indicated above, the advantageous effect tends to be better achieved.

When the rubber composition obtained by the production method 1 contains BR as a rubber component, the amount of the BR based on 100% by mass of the rubber component is preferably 3% by mass or more, more preferably 5% by mass or more, still more preferably 7% by mass or more, while it is preferably 30% by mass or less, more preferably 20% by mass or less, still more preferably 150 by mass or less. When the amount is within the range indicated above, the advantageous effect tends to be better achieved.

When the rubber composition obtained by the production method 1 contains SBR as a rubber component, the amount of the SBR based on 100% by mass of the rubber component is preferably 5% by mass or more, more preferably 50% by mass or more, still more preferably 75% by mass or more, while it is preferably 95% by mass or less, more preferably 90% by mass or less, still more preferably 85% by mass or less. When the amount is within the range indicated above, the advantageous effect tends to be better achieved.

The amount of the vulcanization accelerator per 100 parts by mass of the rubber component in the rubber composition obtained by the production method 1 is preferably 0.5 parts by mass or more, more preferably 2.0 parts by mass or more, still more preferably 3.0 parts by mass or more. The upper limit is preferably 8.0 parts by mass or less, more preferably 6.0 parts by mass or less, still more preferably 5.0 parts by mass or less. When the amount is within the range indicated above, the advantageous effect tends to be better achieved.

The amount of the sulfenamide vulcanization accelerator per 100 parts by mass of the rubber component in the rubber composition obtained by the production method 1 is preferably 0.5 parts by mass or more, more preferably 2.0 parts by mass or more, still more preferably 3.0 parts by mass or more. The upper limit is preferably 8.0 parts by mass or less, more preferably 6.0 parts by mass or less, still more preferably 5.0 parts by mass or less. When the amount is within the range indicated above, the advantageous effect tends to be better achieved.

The amount of the N-cyclohexyl-2-benzothiazolesulfenamide per 100 parts by mass of the rubber component in the rubber composition obtained by the production method 1 is preferably 0.5 parts by mass or more, more preferably 1.5 parts by mass or more, still more preferably 2.0 parts by mass or more, particularly preferably 2.4 parts by mass or more. The upper limit is preferably 6.0 parts by mass or less, more preferably 4.0 parts by mass or less, still more preferably 3.0 parts by mass or less. When the amount is within the range indicated above, the advantageous effect tends to be better achieved.

The amount of the vulcanizer per 100 parts by mass of the rubber component in the rubber composition obtained by the production method 1 is 0.5 parts by mass or more, preferably 1.0 parts by mass or more, more preferably 1.4 parts by mass or more. The upper limit is preferably 7.0 parts by mass or less, more preferably 5.0 parts by mass or less, still more preferably 4.0 parts by mass or less. When the amount is within the range indicated above, the advantageous effect tends to be better achieved.

The amount of the sulfur per 100 parts by mass of the rubber component in the rubber composition obtained by the production method 1 is 0.5 parts by mass or more, preferably 1.0 parts by mass or more, more preferably 1.4 parts by mass or more. The upper limit is preferably 7.0 parts by mass or less, more preferably 5.0 parts by mass or less, still more preferably 4.0 parts by mass or less. When the amount is within the range indicated above, the advantageous effect tends to be better achieved.

The amount of fillers (total amount of fillers such as carbon black and silica) per 100 parts by mass of the rubber component in the rubber composition obtained by the production method 1 is preferably 5 parts by mass or more, more preferably 50 parts by mass or more, still more preferably 80 parts by mass or more, while it is preferably 200 parts by mass or less, more preferably 150 parts by mass or less, still more preferably 120 parts by mass or less. When the amount is within the range indicated above, the advantageous effect tends to be better achieved.

The amount of carbon black per 100 parts by mass of the rubber component in the rubber composition obtained by the production method 1 is preferably 1 part by mass or more, more preferably 3 parts by mass or more, still more preferably 5 parts by mass or more, while it is preferably 100 parts by mass or less, more preferably 50 parts by mass or less, still more preferably 30 parts by mass or less. When the amount is within the range indicated above, the advantageous effect tends to be better achieved.

The amount of silica per 100 parts by mass of the rubber component in the rubber composition obtained by the production method 1 is preferably 5 parts by mass or more, more preferably 50 parts by mass or more, still more preferably 80 parts by mass or more, while it is preferably 150 parts by mass or less, more preferably 120 parts by mass or less, still more preferably 100 parts by mass or less. When the amount is within the range indicated above, the advantageous effect tends to be better achieved.

The amount of silane coupling agents per 100 parts by mass of silica in the rubber composition obtained by the production method 1 is preferably 0.1 parts by mass or more, more preferably 3 parts by mass or more, still more preferably

5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

The amount of plasticizers (total amount of plasticizers) per 100 parts by mass of the rubber component in the rubber composition obtained by the production method 1 is preferably 5 parts by mass or more, more preferably 30 parts by mass or more, still more preferably 35 parts by mass or more. The upper limit is preferably 80 parts by mass or less, more preferably 60 parts by mass or less, still more preferably 50 parts by mass or less. When the amount is within the range indicated above, the advantageous effect tends to be better achieved.

The amount of plasticizers includes the amount of oils or resins contained in oil-extended rubbers or resin-extended rubbers.

The amount of the resin which is solid at room temperature (25°C) per 100 parts by mass of the rubber component in the rubber composition obtained by the production method 1 is preferably 3 parts by mass or more, more preferably 5 parts by mass or more, still more preferably 7 parts by mass or more. The upper limit is preferably 30 parts by mass or less, more preferably 20 parts by mass or less, still more preferably 15 parts by mass or less. When the amount is within the range indicated above, the advantageous effect tends to be better achieved.

The amount of oils per 100 parts by mass of the rubber component in the rubber composition obtained by the production method 1 is preferably preferably 5 parts by mass or more, more preferably 20 parts by mass or more, still more preferably 25 parts by mass or more. The upper limit is preferably 50 parts by mass or less, more preferably 40 parts by mass or less, still more preferably 35 parts by mass or less. When the amount is within the range indicated above, the advantageous effect tends to be better achieved.

The amount of oil includes the amount of oils contained in oil-extended rubbers.

The amount of antioxidants per 100 parts by mass of the rubber component in the rubber composition obtained by the production method 1 is preferably 0.2 parts by mass or more, more preferably 2.0 parts by mass or more, still more preferably 3.4 parts by mass or more. The amount is preferably 10.0 parts by mass or less, more preferably 6.0 parts by mass or less.

The amount of stearic acid per 100 parts by mass of the rubber component in the rubber composition obtained by the production method 1 is preferably 0.5 parts by mass or more, more preferably 1.5 parts by mass or more, still more preferably 2.0 parts by mass or more, while it is preferably 10 parts by mass or less, more preferably 5 parts by mass or less.

The amount of zinc oxide per 100 parts by mass of the rubber component in the rubber composition obtained by the production method 1 is preferably 0.5 parts by mass or more, more preferably 1.5 parts by mass or more, still more preferably 2.0 parts by mass or more, while it is preferably 6.0 parts by mass or less, more preferably 4.0 parts by mass or less.

The amount of wax per 100 parts by mass of the rubber component in the rubber composition obtained by the production method 1 is preferably 0.5 parts by mass or more, more preferably 1.6 parts by mass or more, while it is preferably 8.0 parts by mass or less, more preferably 5.0 parts by mass or less.

The vulcanized rubber composition 1 obtained by the production method 1 desirably has a standard deviation ($\delta$) of a residual dipolar coupling constant ($D_{res}$) smaller than a standard deviation ($\delta$) of a residual dipolar coupling constant ($D_{res}$) of a vulcanized rubber composition (hereinafter, also referred to as "vulcanized rubber composition 2") obtained with the same formulation as that of the vulcanized rubber composition 1 (in comparison with a rubber composition containing the same amounts of the same blended components) by a production method (hereinafter, also referred to as production method 2) including base kneading to knead at least one rubber component; finish kneading to knead a kneaded mixture obtained in the base kneading, at least one vulcanizer, and at least one vulcanization accelerator; and vulcanizing a kneaded mixture obtained in the finish kneading.

In other words, a standard deviation of a residual dipolar coupling constant (hereinafter, a residual dipolar coupling constant of the vulcanized rubber composition 1 is also referred to as "$D_{res}1$") of the vulcanized rubber composition 1 (hereinafter, a standard deviation of a residual dipolar coupling constant of the vulcanized rubber composition 1 is also referred to as "$\delta1$") and a standard deviation of a residual dipolar coupling constant (hereinafter, a residual dipolar coupling constant of the vulcanized rubber composition 2 is also referred to as "$D_{res}2$") of the vulcanized rubber composition 2 (hereinafter, a standard deviation of a residual dipolar coupling constant of the vulcanized rubber composition 2 is also referred to as "$\delta2$") preferably satisfy $\delta1$ (Hz) < $\delta2$ (Hz) .

Here, a ratio $\delta1/\delta2$ is preferably 0.990 or lower, more preferably 0.988, still more preferably 0.986 or lower. When the ratio is within the range indicated above, the advantageous effect tends to be better achieved.

The $\delta1$ is preferably 70 Hz or less, more preferably 68 Hz or less, still more preferably 67 Hz or less. When the $\delta1$ is within the range indicated above, the advantageous effect tends to be better achieved. The lower limit of the $\delta1$ is not limited and may be 0 Hz.

The $D_{res}1$ is preferably 200 Hz or more, more preferably 220 Hz or more, still more preferably 223 Hz or more, while it is preferably 300 Hz or less, more preferably 280 Hz or less, still more preferably 260 Hz or less. When the $D_{res}1$ is

within the range indicated above, the advantageous effect tends to be better achieved.

In the present embodiment, the residual dipolar coupling constant ($D_{res}$) and a standard deviation ($\sigma$) thereof can be utilized as barometers reflecting the cross-link density and the distribution of cross-link densities of the vulcanized rubber composition. Here, the dipole corresponds to $^1H$.

The residual dipolar coupling constant indicates a size of coupling between remaining $^1Hs$ and means the size of $^1H$-$^1H$ interaction. The larger the $^1H$-$^1H$ interaction is, the larger the residual dipolar coupling constant becomes. The smaller the $^1H$-$^1H$ interaction is, the smaller the residual dipolar coupling constant becomes.

The higher the cross-link density is, the larger the $^1H$-$^1H$ interaction becomes, leading to a larger residual dipolar coupling constant. When the amounts of sulfur and vulcanization accelerators in a filler-free isoprene rubber composition are varied to prepare a sample with a different cross-link density, and the degree of swelling (Swell) and the residual dipolar coupling constant ($D_{res}$) of the sample are actually measured, the residual dipolar coupling constant tends to increase as the degree of swelling decreases (as the cross-link density increases). Thus, the degree of swelling, i.e., cross-link density, correlates with the residual dipolar coupling constant.

The residual dipolar coupling constant may be determined from a transverse magnetization decay curve obtained by $^1H$-NMR analysis. However, this method is disadvantageous in that the analysis is difficult to perform with a small sample amount and that fitting errors may reduce the accuracy of data.

In contrast, determining a residual dipolar coupling constant and a standard deviation thereof by $^1H$ multiple-quantum NMR analysis enables determination of the residual dipolar coupling constant and a standard deviation thereof with a small sample amount. Therefore, the cross-link density and the distribution of cross-link densities of a rubber composition can be accurately evaluated even with a small sample amount without being affected by the types or amounts of fillers. In other words, the cross-link density and/or the distribution of cross-link densities of a rubber composition can be determined from the residual dipolar coupling constant and/or a standard deviation of the residual dipolar coupling constant of the rubber composition obtained by $^1H$ multiple-quantum NMR analysis. Thus, the state of cross-linking can be analyzed.

Determining the residual dipolar coupling constant and/or a standard deviation of the residual dipolar coupling constant by $^1H$ multiple-quantum NMR analysis also enables accurate evaluation of the cross-link density and/or the distribution of cross-link densities of not only a filler-free rubber composition but also a filler-containing rubber composition even with a small sample amount, compared to conventional methods such as a toluene swelling method. A filler-containing rubber composition can also be accurately evaluated probably because the residual dipolar coupling constant reflects the cross-link density of only a rubber matrix portion that is not affected by fillers.

A $^1H$ multiple-quantum NMR method described later in the measurement method of the second embodiment is applicable as the $^1H$ multiple-quantum NMR analysis.

The measurement temperature may vary depending on the sample. Preferably, the measurement is performed at a temperature higher by not less than 30°C than the glass transition temperature of the sample.

According to the above, an analysis can be performed even in the case where only a small amount of a sample can be collected or where the analysis is for measuring a difference in the cross-link density or the distribution thereof between finer portions in a rubber product. Thus, the amount of the rubber composition used as a sample in the measurement may be 0.2 g or less, 0.1 g or less, 0.01 g or less, or 0.005 g or less.

Any rubber composition (sample) may be measured in the above-described analysis. The rubber composition may be collected from rubber products such as tires or may be collected from tires.

The production method of the present embodiment is production method 1 of the above-described vulcanized rubber composition, the method including base kneading to knead at least one rubber component and at least one vulcanization accelerator; finish kneading to knead kneaded mixture 1 obtained in the base kneading and at least one vulcanizer; and vulcanizing kneaded mixture 2 obtained in the finish kneading. This production method can produce rubber compositions with high cross-link homogeneity.

[Second embodiment]

The second embodiment relates to a method for setting a measurement temperature and a method for measuring a residual dipolar interaction constant.

According to Macromolecules, (US), 2020, 53, pp. 11166-11177, measurement at a high temperature is considered desirable because, basically in measurement at a high temperature, the effect of reduced mobility due to the cross-link constraint can be extracted without being affected by the movement of polymers, and the effect can be evaluated as $D_{res}$ that is a cross-link density indicator. However, if the measurement is performed at a high temperature, the sample may be thermally degraded to change its cross-linked structure. Consequently, for example, the sample may not be evaluated in the condition originally intended to be analyzed. Thus, a measurement temperature to reduce thermal degradation is desirably set for each sample type. The second embodiment aims to provide a method for setting a temperature for measuring a residual dipolar interaction constant while reducing the influence of thermal degradation and

a method for measuring a residual dipolar interaction constant.

The second embodiment includes a method for setting a measurement temperature, the method including setting a measurement temperature in measuring a residual dipolar interaction constant of a vulcanized diene-based rubber composition based on susceptibility of the composition to thermal degradation.

According to the second embodiment, a measurement temperature to reduce the influence of thermal degradation is set for each sample, and the residual dipolar interaction constant can be measured at the set temperature.

<Method for setting measurement temperature>

The setting method according to the second embodiment involves setting a measurement temperature in measuring a residual dipolar interaction constant ($D_{res}$) of a vulcanized diene-based rubber composition based on susceptibility of the composition to thermal degradation. This method can set a measurement temperature to reduce the influence of thermal degradation for each vulcanized diene-based rubber composition.

According to the setting method, for example, a temperature for measuring a residual dipolar interaction constant of a vulcanized diene-based rubber composition whose residual dipolar interaction constant will be measured is varied to measure the degree of thermal degradation. A temperature at which the influence of thermal degradation is acceptable can be set as a temperature for measuring a residual dipolar interaction constant.

Although the indicator of thermal degradation is not limited, a degree of swelling (SWELL) is preferably used to easily grasp changes in the cross-linked structure. Specifically, the temperature for measuring is preferably set based on the degree of swelling of the vulcanized diene-based rubber composition in the setting method.

The degree of swelling refers to a degree of volume swelling measured by a toluene swelling method.

With the degree of swelling being used as an indicator of thermal degradation, the measurement temperature is preferably set such that a rate of change in the degree of swelling between before and after measuring a residual dipolar interaction constant is 10% or lower, more preferably 5% or lower, still more preferably 2% or lower. The lower limit is not limited and may be 0%.

The rate of change in the degree of swelling is calculated by the following equation.

Rate of change in degree of swelling (%) = {| (Degree of swelling after measuring $D_{res}$) - (Degree of swelling before measuring $D_{res}$)|/(Degree of swelling before measuring $D_{res}$)} $\times$ 100

The setting method may further include setting the duration of the measurement based on susceptibility of the vulcanized diene-based rubber composition to thermal degradation. Examples of the indicator of thermal degradation include the indicators described above for the measurement temperature. The measurement temperature may be set first, and then an appropriate duration of the measurement at the set temperature may be set.

In the setting method, the mobility of the polymers in the vulcanized diene-based rubber composition may be considered in setting the measurement temperature (and duration of the measurement). Thus, the cross-link density can be properly reflected in the analysis result while reducing the influence of thermal degradation.

In the setting method, the upper limit of the measurement temperature (and duration of the measurement) may be determined based on susceptibility of the vulcanized diene-based rubber composition to thermal degradation. The lower limit of the measurement temperature (and duration of the measurement) may be determined based on the mobility of the polymers.

Non-limiting examples of diene-based rubbers usable in the vulcanized diene-based rubber composition include usual diene-based rubbers such as natural rubber (NR), polyisoprene rubber (IR), polybutadiene rubber (BR), and styrene-butadiene rubber (SBR). NR, BR, and SBR are preferred among these.

The vulcanized diene-based rubber composition has undergone vulcanization with a vulcanizer such as sulfur or a vulcanization accelerator. The sulfur and the vulcanization accelerator are not limited and may be usual ones.

The vulcanized diene-based rubber composition may contain a filler or other additives. Such components may also be usual ones.

<Method for measuring residual dipolar interaction constant>

In the measuring method of the second embodiment, the residual dipolar interaction constant of a vulcanized diene-based rubber composition is measured at a measurement temperature set by the above-described setting method.

For a vulcanized diene-based rubber composition containing a diene-based rubber having a glass transition temperature (Tg) of lower than -60°C, the measurement temperature is preferably 30°C or higher and 100°C or lower, more preferably 90°C or lower, still more preferably 80°C or lower, further more preferably 75°C or lower, while it is more preferably 40°C or higher, still more preferably 50°C or higher, further more preferably 60°C or higher.

When the measurement temperature is set as described above, the cross-link density can be more properly reflected in the analysis result while further reducing the influence of thermal degradation.

Examples of the diene-based rubber having a Tg of lower than -60°C include NR, IR, and BR.

For a vulcanized diene-based rubber composition containing a diene-based rubber having a glass transition temperature (Tg) of -60°C or higher in the vulcanized diene-based rubber composition, the measurement temperature is preferably 50°C or higher and 120°C or lower, more preferably 110°C or lower, still more preferably 100°C or lower, while it is more preferably 60°C or higher, still more preferably 70°C or higher, and may be 90°C or higher.

When the measurement temperature is set as described above, the cross-link density can be more properly reflected in the analysis result while further reducing the influence of thermal degradation.

Examples of the diene-based rubber having a Tg of - 60°C or higher include SBR.

For a vulcanized diene-based rubber composition containing both a diene-based rubber having a Tg of lower than -60°C and an diene-based rubber having a Tg of -60°C or higher, the measurement temperature is preferably 50°C or higher and 100°C or lower, more preferably 90°C or lower, still more preferably 80°C or lower, further more preferably 75°C or lower, while it is more preferably 60°C or higher, still more preferably 70°C or higher.

When the measurement temperature is set as described above, the cross-link density can be more properly reflected in the analysis result while further reducing the influence of thermal degradation.

The Tg of the rubber is measured at a temperature increase rate of 10°C/min by differential scanning calorimetry (DSC) in accordance with JIS K 7121.

In the measurement method, the duration of the measurement is preferably 1.5 hours or shorter, more preferably 1.3 hours or shorter, still more preferably 1.2 hours or shorter, while it is preferably 0.5 hours or longer, more preferably 0.8 hours or longer.

When the duration of the measurement is set as described above, the cross-link density can be more properly reflected in the analysis result while further reducing the influence of thermal degradation.

The residual dipolar interaction constant ($D_{res}$) of the vulcanized diene-based rubber composition can be measured by, for example, solid state NMR analysis. Since the $D_{res}$ correlates well with the cross-link density as described in JP 2014-85309 A, the cross-link density can be evaluated based on a measured $D_{res}$.

Here, as described in the published document, the residual dipolar interaction constant ($D_{res}$) indicates a size of coupling between remaining $^1$Hs and means the size of $^1$H-$^1$H interaction. The larger the interaction is, the larger the $D_{res}$ becomes. The smaller the interaction is, the smaller the $D_{res}$ becomes.

The $D_{res}$ can be determined from a transverse magnetization decay curve obtained by $^1$H-NMR analysis as described in the published document. Examples of known techniques to obtain a transverse magnetization decay curve include a solid echo method, the Hahn echo method, and a CPMG method. To accurately determined the $D_{res}$, the Hahn echo method is preferred.

The decay parameters of a transverse magnetization decay curve measured by the Hahn method include two parameters, i.e., a transverse relaxation time constant ($T_2$) and a residual dipolar interaction constant ($D_{res}$). Therefore, in fitting the transverse magnetization decay curve, the transverse relaxation time constant needs to be separated from the residual dipolar interaction constant.

For example, the transverse magnetization decay curve may be fitted with the equation below. In the equation below, the rubber composition is assumed to consist of three components of A, B, and C; the $D_{res.A}$ and $D_{res.B}$ refer to the $D_{res}$ of the component A and the $D_{res}$ of the component B, respectively; the M(t) refers to the magnitude of magnetization at a certain time t; and the M(0) refers to the magnitude of initial magnetization.

$$\frac{M(t)}{M(0)} = Aexp\left\{-\frac{t}{T_{2A}} - R_A t^2\right\} + Bexp\left\{-\frac{t}{T_{2B}} - R_B t^2\right\} + Cexp\left\{-\frac{t}{T_{2C}}\right\}$$

$$R_A = \frac{9}{40}(\mathrm{D}_{res.A} \times 2\pi)^2 \qquad R_B = \frac{9}{40}(\mathrm{D}_{res.B} \times 2\pi)^2$$

$$A + B + C = 1$$

The transverse relaxation time constant may be measured by another technique. In the case of a rubber composition, taking the mobility rate of rubber polymer chains into consideration, the following relationship is roughly established in principle: Transverse relaxation time constant ($T_2$) = Relaxation time constant ($T_{1\rho}$) during spin-locking. Therefore, measured $T_{1\rho}$ can be substituted as $T_2$.

The process to determine a residual dipolar interaction constant using a transverse magnetization decay curve is summarized as the following (1) to (3):

(1) A transverse magnetization decay curve is obtained by the Hahn echo method;
(2) $T_{1\rho}$ (relaxation time constant during spin-locking) is determined; and
(3) $D_{res}$ is obtained from the transverse magnetization decay curve on the assumption of $T_2 = T_{1\rho}$.

Since the molecular structure in a rubber is amorphous, the $^1H$-$^1H$ distance is not uniform. Thus, the size of the $^1H$-$^1H$ interaction is not uniform and may be varied and distributed. For this reason, a distribution function is preferably introduced in the residual dipolar interaction constant for the analysis. Examples of the distribution function include the equations below. In the equations, F(S) refers to a frequency; $\beta_A$ refers to a constant related to the width of the distribution; $R_A$ refers to the $R_A$ in the fitting function for the transverse magnetization decay curve; and $R_{Am}$ refers to a mean value of $R_A$.

$$F(S) = \frac{1}{\beta_A\sqrt{\pi}} exp\left(-\frac{S^2}{{\beta_A}^2}\right) \qquad S = ln\frac{R_A}{R_{Am}}$$

The system used in the NMR analysis is preferably a low magnetic field NMR system, specifically, a 50 MHz or less-NMR system. Of commercially available systems, a 20 MHz-NMR system is preferred. The analysis of a transverse magnetization decay curve with a high magnetic field NMR system is affected by chemical shifts, and thus the analysis becomes complicated or may not be able to be performed. In the analysis with a less than 20 MHz-NMR system, signals are weak, and thus the analysis becomes complicated or may not be able to be performed.

The $D_{res}$ may also be determined by a $^1H$ multiple-quantum NMR method. This method allows for a measurement with a small sample amount and can provide highly accurate data.

The $^1H$ multiple-quantum NMR method corresponds to, for example, $^1H$ multiple-quantum nuclear magnetic resonance described in Saalwachter et al, Journal of Chemical Physics, 119(6), 3468-3482 (document A) or the like.

For example, the $^1H$ multiple-quantum NMR method may be performed in accordance with "II. EXPERIMENT, B. NMR spectroscopy" in the document A. A multiple quantum build-up curve (FIG. 1) can be obtained by the method.

The multiple quantum build-up curve obtained by the $^1H$ multiple-quantum NMR method include two parameters, i.e., a residual dipolar interaction constant ($D_{res}$) and a standard deviation ($\sigma$) of the residual dipolar interaction constant.

For example, the multiple quantum build-up curve may be fitted with the following equation (I). $I_{nDQ}$ refers to a theoretical curve of the multiple quantum build-up curve, and $\tau_{DQ}$ is one of experimental variables.

$$I_{\mathrm{nDQ}}(D_{\mathrm{res}}, \sigma, \tau_{\mathrm{DQ}}) = \frac{1}{2}\left\{1 - \frac{\exp\left(-\dfrac{\frac{2}{5}D_{\mathrm{res}}^2\tau_{\mathrm{DQ}}^2}{1+\frac{4}{5}\sigma^2\tau_{\mathrm{DQ}}^2}\right)}{\sqrt{1+\frac{4}{5}\sigma^2\tau_{\mathrm{DQ}}^2}}\right\} \qquad \text{(I)}$$

The process to determine a residual dipolar interaction constant by a $^1H$ multiple-quantum NMR method is summarized as the following (1) and (2):

(1) A multiple quantum build-up curve is obtained by a $^1H$ multiple-quantum NMR method; and
(2) the multiple quantum build-up curve obtained by the experiment is fitted with the theoretical curve of the equation (I) using a residual dipolar interaction constant ($D_{res}$) and a standard deviation ($\sigma$) of the residual dipolar interaction constant as variables.

As described above, since the molecular structure in a rubber is amorphous, the $^1H$-$^1H$ distance is not uniform. Thus, the size of the $^1H$-$^1H$ interaction is not uniform and may be varied and distributed. Therefore, the distribution is preferably considered in the analysis. The analysis with the equation (I) assumes the distribution.

The system used in the $^1H$ multiple-quantum NMR method is not limited. In terms of the magnitude of the applied magnetic field, the system is preferably a 75 kHz or more-system, more preferably a 100 kHz-system.

Any vulcanized diene-based rubber composition may be analyzed in the second embodiment. The vulcanized diene-based rubber composition may be collected from rubber products such as tires or may be collected from tires.

EXAMPLES

Examples (working examples) which are considered preferable to implement the present invention are described below, though the scope of the present invention is not limited to the examples.

[Present embodiment]

Chemicals used in examples are listed below. If necessary, the chemicals are purified by usual techniques.

NR: TSR20
SBR: HPR850 (styrene content: 27.5% by mass, vinyl content: 59% by mass) available JSR Corporation.
BR: BR1280 available from LG Chem
Carbon black: DIABLACK N220 (Mitsubishi Chemical Corporation, $N_2SA$: 114 $m^2/g$)
Silica: TOKUSIL USG ($N_2SA$: 170 $m^2/g$) available from Tokuyama Corporation
Silane coupling agent: Si266 (bis(3-triethoxysilylpropyl)disulfide) available from Degussa
Oil: vivatec500 (aromatic process oil) available from H&R
Resin 1: SA85 (softening point: 85°C, Mw: 1000, a copolymer of α-methylene and styrene) available from Arizona Chemical
Resin 2: Petrotac 90 (C5C9 petroleum resin, Mw: 1600, softening point: 95°C) available from Tosoh Corporation
Wax: Ozoace 0355 available from Nippon Seiro Co., Ltd.
Antioxidant 6C: NOCCRAC 6C (N-(1,3-dimethylbutyl)-N'-phenyl-p-phenylenediamine) available from Ouchi Shinko Chemical Industrial Co., Ltd.
Antioxidant RD: NOCCRAC RD (poly(2,2,4-trimethyl-1,2-dihydroquinoline)) available from Ouchi Shinko Chemical Industrial Co., Ltd.
Stearic acid: stearic acid "TSUBAKI" available from NOF Corporation
Zinc oxide: zinc oxide #1 available from Mitsui Mining & Smelting Co., Ltd.
Sulfur: HK-200-5 (powdered sulfur) available from Hosoi Chemical Industry Co., Ltd.
Vulcanization accelerator CZ: NOCCELER CZ (N-cyclohexyl-2-benzothiazolylsulfenamide) available from Ouchi Shinko Chemical Industrial Co., Ltd.
Vulcanization accelerator D: NOCCELER D (N,N'-diphenylguanidine (DPG)) available from Ouchi Shinko Chemical Industrial Co., Ltd.

<Production of vulcanized rubber composition>

According to the formulation in Table 1, the materials other than the sulfur and the vulcanization accelerator D are kneaded in a 1.7-L Banbury mixer (Kobe Steel, Ltd.) at 150°C for five minutes to obtain kneaded mixture 1 (base kneading).
The sulfur and the vulcanization accelerator D are added to the kneaded mixture1 1, and they are kneaded using an open roll mill at 80°C for five minutes to obtain kneaded mixture 2 (unvulcanized rubber composition) (finish kneading).
The kneaded mixture 2 is vulcanized at 170°C for 10 minutes to obtain a vulcanized rubber composition (vulcanization).
Vulcanized rubber compositions with different formulations according to Table 1 are simulated. Table 1 shows the results calculated as described in the evaluation methods below.

<$^1H$ multiple-quantum NMR analysis>

Each vulcanized rubber composition (sample amount: 4 mg) is subjected to $^1H$ multiple-quantum NMR analysis using Bruker AVANCE600 (measurement frequency: 600.15 MHz) available from Bruker to obtain a multiple quantum build-up curve. The analysis is performed at a magnitude of the applied magnetic field of 125 kHz and a measurement temperature of 80°C.
The multiple quantum build-up curve is fitted with the theoretical curve of the equation (I), and a residual dipolar coupling constant $D_{res}$ and a standard deviation σ of the residual dipolar coupling constant are obtained.

[Table 1]

| | | | Comparative Example 1 | Comparative Example 2 | Example 1 |
|---|---|---|---|---|---|
| Formulation (parts by mass) | Base kneading | NR | 12 | 12 | 12 |
| | | SBR | 80 | 80 | 80 |
| | | BR | 8 | 8 | 8 |
| | | Carbon black | 5 | 5 | 5 |
| | | Silica | 90 | 90 | 90 |
| | | Silane coupling agent | 7 | 7 | 7 |
| | | Oil | 30 | 30 | 30 |
| | | Resin 1 | 9 | 9 | 9 |
| | | Resin 2 | 1 | 1 | 1 |
| | | Wax | 2 | 2 | 2 |
| | | Antioxidant 6C | 2.5 | 2.5 | 2.5 |
| | | Antioxidant RD | 1.0 | 1.0 | 1.0 |
| | | Stearic acid | 2.5 | 2.5 | 2.5 |
| | | Zinc oxide | 2.5 | 2.5 | 2.5 |
| | | Vulcanization accelerator CZ | | | 2.4 |
| | Finish Kneading | Sulfur | 1.4 | 1.5 | 1.5 |
| | | Vulcanization accelerator CZ | 2.6 | 2.4 | |
| | | Vulcanization accelerator D | 2.4 | 1.6 | 1.6 |
| $D_{res}$ (Hz) | | | 218 | 219 | 225 |
| σ (Hz) | | | 69 | 68 | 67 |

[Second embodiment]

<Production of vulcanized diene-based rubber composition>

Chemicals used in examples are listed below.

NR: SVR-L (Tg -70°C)
BR: BR150B (cis content: 96%, Tg -85°C) available from Ube Industries, Ltd.
SBR: SBR1502 (solution polymerized SBR, Tg -56°C) available from Sumitomo Chemical Co., Ltd.
Carbon black: SHOBLACK N220 ($N_2SA$: 110 $m^2/g$, DBP absorption: 115 ml/100 g) available from Cabot Japan K.K.
Zinc oxide: zinc oxide available from Mitsui Mining & Smelting Co., Ltd.
Stearic acid: stearic acid "TSUBAKI" available from NOF Corporation
Sulfur: powdered sulfur available from Tsurumi

Chemical Industry Co., Ltd.

Vulcanization accelerator: NOCCELER CZ (N-cyclohexyl-2-benzothiazolylsulfenamide) available from Ouchi Shinko Chemical Industrial Co., Ltd.

According to the formulation in Table 2, the rubbers, the carbon black, and the additives (sulfur, vulcanization accelerator, zinc oxide, and stearic acid) were kneaded with a kneading machine and then pressed at 150°C to obtain a vulcanized diene-based rubber composition. The duration of the vulcanization was T100 determined by CURELASTOMETER (registered trade mark).

[Table 2]

| | | Example 11 | Example 12 | Example 13 |
|---|---|---|---|---|
| Formulation (parts by mass) | NR | 100 | 0 | 0 |
| | BR | 0 | 100 | 0 |
| | SBR | 0 | 0 | 100 |
| | Carbon black | 50 | 50 | 50 |
| | Zinc oxide | 3 | 3 | 3 |
| | Stearic acid | 3 | 3 | 3 |
| | Sulfur | 1 | 1 | 1 |
| | Vulcanization accelerator | 1.5 | 1.5 | 1.5 |

<Evaluation of thermal effect>

(Measurement of temperature variable $D_{res}$ by low magnetic field time domain NMR)

Each vulcanized diene-based rubber composition was subjected to $^1$H-NMR analysis at various temperatures using Bruker Minispec mq20 (measurement frequency: 19.65 MHz) available from Bruker under the conditions shown in Table 3, whereby a multiple quantum build-up curve was obtained. The pulse according to a multiple quantum (MQ) method was used for the measurement. The magnitude of the applied magnetic field was 100 kHz.

The obtained multiple quantum build-up curve was fitted with the theoretical curve of the equation (I).

[Table 3]

| Initial cycle tims | Cycle time increment | Number of cycles | Number of DQ build-up points | Double increment after X points | Duration of last pulse (ms) | NS | Recycle delay | Duration of measurement |
|---|---|---|---|---|---|---|---|---|
| 0 | 0.038 | 2 | 120 | X = 40 | 21.000 | 16 | 1 | 1h 9min |

Table 4 shows the measured $D_{res}$ and the $D_{res}$ distribution.

(Measurement of degree of swelling (SWELL))

The vulcanized diene-based rubber composition after the $D_{res}$ measurement at various temperatures was immersed in a sufficient amount of a toluene solvent at room temperature for 24 hours or longer and 72 hour or shorter to measure a degree of volume swelling. Table 4 shows the result.

[Table 4]

| | Example 11 (NR) | | | Example 12 (BR) | | | Example 13 (SBR) | | |
|---|---|---|---|---|---|---|---|---|---|
| Measurement temperature | $D_{res}$ (Hz) | Distribution (Hz) | SWELL (%) | $D_{res}$ (Hz) | Distribution (Hz) | SWELL (%) | $D_{res}$ (Hz) | Distribution (Hz) | SWELL (%) |
| 303K (30°C) | 203 | 32 | 315 | 233 | 78 | 317 | 283 | 232 | 348 |
| 323K (50°C) | 198 | 26 | 312 | 230 | 83 | 317 | 289 | 143 | 353 |
| 353K (80°C) | 195 | 30 | 315 | 229 | 91 | 316 | 251 | 125 | 353 |
| 373K (100°C) | 185 | 32 | 322 | 225 | 90 | 315 | 236 | 123 | 350 |
| 393K (120°C) | 170 | 45 | 342 | 227 | 105 | 330 | 224 | 116 | 357 |

(continued)

| | Example 11 (NR) | | | Example 12 (BR) | | | Example 13 (SBR) | | |
|---|---|---|---|---|---|---|---|---|---|
| Measurement temperature | $D_{res}$ (Hz) | Distribution (Hz) | SWELL (%) | $D_{res}$ (Hz) | Distribution (Hz) | SWELL (%) | $D_{res}$ (Hz) | Distribution (Hz) | SWELL (%) |
| 413K (140°C) | 152 | 66 | 360 | 222 | 118 | 333 | 214 | 126 | 373 |

The above results demonstrate that the $D_{res}$ decreases or the distribution of the $D_{res}$ increases, and also the SWELL increases at 100°C or higher in the case of NR, at 120°C or higher in the case of BR, and 140°C or higher in the case of SBR, indicating thermal effects (thermal degradation) on the samples at the above-described temperatures.
Therefore, in order to reduce the influence of thermal degradation, the measurement temperature needs to be set at a temperature lower than the above-described temperatures.
Exemplary embodiments of the present invention include the following.
Embodiment 1. A vulcanized rubber composition obtained by a production method including:

base kneading to knead at least one rubber component and at least one vulcanization accelerator;
finish kneading to knead kneaded mixture 1 obtained in the base kneading and at least one vulcanizer; and
vulcanizing kneaded mixture 2 obtained in the finish kneading.

Embodiment 2. The vulcanized rubber composition according to Embodiment 1,
wherein the vulcanized rubber composition has a standard deviation of a residual dipolar coupling constant smaller than a standard deviation of a residual dipolar coupling constant of a vulcanized rubber composition obtained by a production method including:

base kneading to knead at least one rubber component;
finish kneading to knead a kneaded mixture obtained in the base kneading, at least one vulcanizer, and at least one vulcanization accelerator; and
vulcanizing a kneaded mixture obtained in the finish kneading,
the two vulcanized rubber compositions being produced using the same formulation.

Embodiment 3. The vulcanized rubber composition according to Embodiment 1 or 2,
wherein the base kneading includes kneading at least a sulfenamide vulcanization accelerator.
Embodiment 4. The vulcanized rubber composition according to Embodiment 1 or 2,
wherein the base kneading includes kneading at least N-cyclohexyl-2-benzothiazolylsulfenamide.
Embodiment 5. The vulcanized rubber composition according to any combination with any one of Embodiments 1 to 4,
wherein the base kneading includes kneading at least an isoprene-based rubber, polybutadiene rubber, and styrene-butadiene rubber.
Embodiment 6. The vulcanized rubber composition according to any combination with any one of Embodiments 1 to 5,
wherein the vulcanized rubber composition contains an isoprene-based rubber in an amount of 5% by mass or more and 60% by mass or less based on 100% by mass of the rubber component.
Embodiment 7. The vulcanized rubber composition according to any combination with any one of Embodiments 1 to 6,
wherein the vulcanized rubber composition contains polybutadiene rubber in an amount of 3% by mass or more and 20% by mass or less based on 100% by mass of the rubber component.
Embodiment 8. The vulcanized rubber composition according to any combination with any one of Embodiments 1 to 7,
wherein the vulcanized rubber composition contains styrene-butadiene rubber in an amount of 5% by mass or more and 95% by mass or less based on 100% by mass of the rubber component.
Embodiment 9. A method for producing a vulcanized rubber composition, the method including:

base kneading to knead at least one rubber component and at least one vulcanization accelerator;
finish kneading to knead kneaded mixture 1 obtained in the base kneading and at least one vulcanizer; and
vulcanizing kneaded mixture 2 obtained in the finish kneading.

Embodiment 10. A method for setting a measurement temperature, the method including

setting a measurement temperature in measuring a residual dipolar interaction constant of a vulcanized diene-based rubber composition based on susceptibility of the composition to thermal degradation.

Embodiment 11. The setting method according to Embodiment 10,
wherein the measurement temperature is set based on a degree of swelling of the composition.

Embodiment 12. A method for measuring a residual dipolar interaction constant, the method including measuring a residual dipolar interaction constant of a vulcanized diene-based rubber composition at a measurement temperature set by the method according to Embodiment 10 or 11.

Embodiment 13. The measurement method according to Embodiment 12,

wherein a diene-based rubber used in the composition has a glass transition temperature of lower than -60°C, and the measurement temperature is 30°C or higher and 100°C or lower.

Embodiment 14. The measurement method according to Embodiment 12,

wherein a diene-based rubber used in the composition has a glass transition temperature of -60°C or higher, and the measurement temperature is 50°C or higher and 120°C or lower.

Embodiment 15. The measurement method according to any combination with any one of Embodiments 12 to 14, wherein a duration of the measurement is 1.5 hours or shorter.

## Claims

**1.** A vulcanized rubber composition obtained by a production method comprising:

base kneading to knead at least one rubber component and at least one vulcanization accelerator;
finish kneading to knead kneaded mixture 1 obtained in the base kneading and at least one vulcanizer; and
vulcanizing kneaded mixture 2 obtained in the finish kneading.

**2.** The vulcanized rubber composition according to claim 1,

wherein the vulcanized rubber composition has a standard deviation of a residual dipolar coupling constant smaller than a standard deviation of a residual dipolar coupling constant of a vulcanized rubber composition obtained by a production method including:
base kneading to knead at least one rubber component;
finish kneading to knead a kneaded mixture obtained in the base kneading, at least one vulcanizer, and at least one vulcanization accelerator; and
vulcanizing a kneaded mixture obtained in the finish kneading,
the two vulcanized rubber compositions being produced using the same formulation.

**3.** The vulcanized rubber composition according to claim 1 or 2,
wherein the base kneading includes kneading at least a sulfenamide vulcanization accelerator.

**4.** The vulcanized rubber composition according to claim 1 or 2,
wherein the base kneading includes kneading at least N-cyclohexyl-2-benzothiazolylsulfenamide.

**5.** The vulcanized rubber composition according to any one of claims 1 to 4,
wherein the base kneading includes kneading at least an isoprene-based rubber, polybutadiene rubber, and styrene-butadiene rubber.

**6.** The vulcanized rubber composition according to any one of claims 1 to 5,
wherein the vulcanized rubber composition contains an isoprene-based rubber in an amount of 5% by mass or more and 60% by mass or less based on 100% by mass of the rubber component.

**7.** The vulcanized rubber composition according to any one of claims 1 to 6,
wherein the vulcanized rubber composition contains polybutadiene rubber in an amount of 3% by mass or more and 20% by mass or less based on 100% by mass of the rubber component.

**8.** The vulcanized rubber composition according to any one of claims 1 to 7, wherein the vulcanized rubber composition contains styrene-butadiene rubber in an amount of 5% by mass or more and 95% by mass or less based on 100% by mass of the rubber component.

**9.** A method for producing a vulcanized rubber composition, the method comprising:

base kneading to knead at least one rubber component and at least one vulcanization accelerator;
finish kneading to knead kneaded mixture 1 obtained in the base kneading and at least one vulcanizer; and
vulcanizing kneaded mixture 2 obtained in the finish kneading.

**10.** A method for setting a measurement temperature, the method comprising setting a measurement temperature in measuring a residual dipolar interaction constant of a vulcanized diene-based rubber composition based on susceptibility of the composition to thermal degradation.

**11.** The setting method according to claim 10, wherein the measurement temperature is set based on a degree of swelling of the composition.

**12.** A method for measuring a residual dipolar interaction constant, the method comprising measuring a residual dipolar interaction constant of a vulcanized diene-based rubber composition at a measurement temperature set by the method according to claim 10 or 11.

**13.** The measurement method according to claim 12,

wherein a diene-based rubber used in the composition has a glass transition temperature of lower than -60°C, and the measurement temperature is 30°C or higher and 100°C or lower.

**14.** The measurement method according to claim 12,

wherein a diene-based rubber used in the composition has a glass transition temperature of -60°C or higher, and the measurement temperature is 50°C or higher and 120°C or lower.

**15.** The measurement method according to any one of claims 12 to 14, wherein a duration of the measurement is 1.5 hours or shorter.

FIG.1

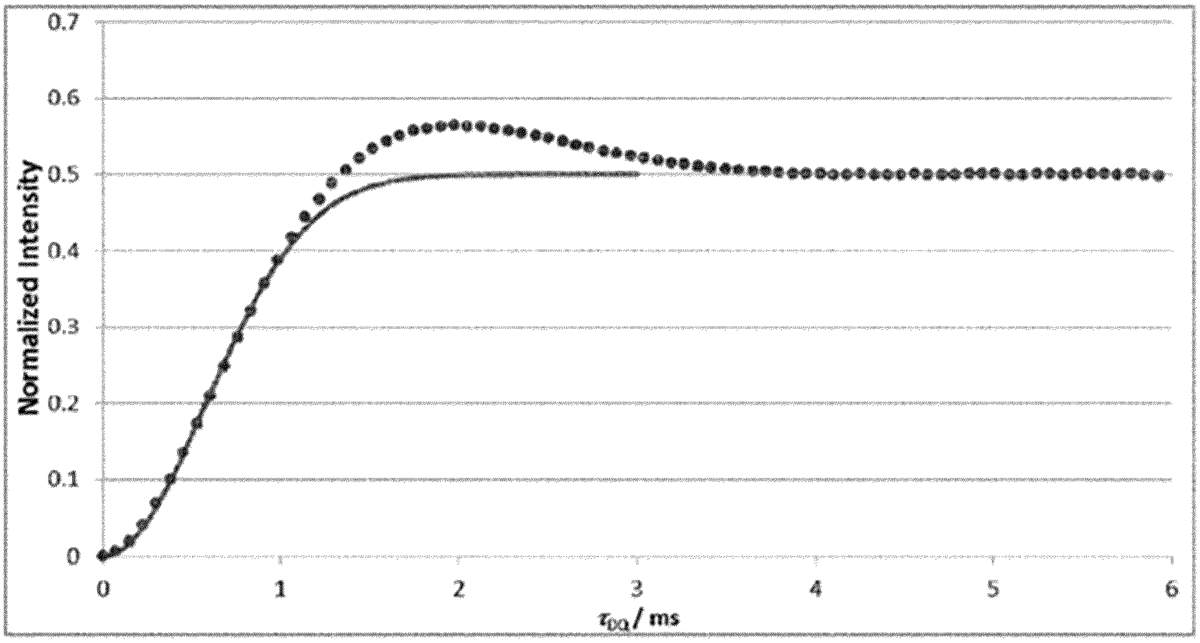

Europäisches Patentamt
European Patent Office
Office européen des brevets

# EUROPEAN SEARCH REPORT

Application Number
EP 24 20 8583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/053094 A1 (TAKEUCHI MIZUKI [JP] ET AL) 25 February 2016 (2016-02-25)<br>* paragraphs [0012], [0035] - [0040], [0060], [0062] * | 1-11 | INV.<br>C08J5/02<br>B60C1/00<br>C08L7/02 |
| X | US 7 241 843 B2 (SUMITOMO RUBBER IND [JP]) 10 July 2007 (2007-07-10)<br>* col. 1, l. 65 - col. 2, l. 6; col. 5, l. 1-2;<br>col. 5, l. 16-25; Examples 1-6; claim 6 * | 1-11 | |
| X | JP 2014 085309 A (SUMITOMO RUBBER IND; NAT INST OF ADV IND & TECHNOL)<br>12 May 2014 (2014-05-12)<br>* paragraphs [0031] - [0034] * | 12-15 | |
| X | JP 2016 222827 A (SUMITOMO RUBBER IND)<br>28 December 2016 (2016-12-28)<br>* paragraphs [0021] - [0023], [0041] - [0043] * | 12-15 | |

TECHNICAL FIELDS SEARCHED (IPC)

C08J
B60C
C09J
G01R
C08L
G01N

The present search report has been drawn up for all claims

2

| Place of search | Date of completion of the search | Examiner |
|---|---|---|
| Munich | 11 April 2025 | Schweissguth, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 20 8583

This annex lists the patent family members relating to the patent documents cited in the above-mentioned European search report. The members are as contained in the European Patent Office EDP file on
The European Patent Office is in no way liable for these particulars which are merely given for the purpose of information.

11-04-2025

| Patent document cited in search report | Publication date | Patent family member(s) | Publication date |
|---|---|---|---|
| US 2016053094 A1 | 25-02-2016 | CN 105073871 A | 18-11-2015 |
| | | DE 112014001758 T5 | 10-12-2015 |
| | | JP 5850201 B2 | 03-02-2016 |
| | | JP WO2014157722 A1 | 16-02-2017 |
| | | KR 20150123300 A | 03-11-2015 |
| | | US 2016053094 A1 | 25-02-2016 |
| | | WO 2014157722 A1 | 02-10-2014 |
| US 7241843 B2 | 10-07-2007 | CN 1876704 A | 13-12-2006 |
| | | EP 1731560 A1 | 13-12-2006 |
| | | JP 5006527 B2 | 22-08-2012 |
| | | JP 2006335984 A | 14-12-2006 |
| | | US 2006276583 A1 | 07-12-2006 |
| JP 2014085309 A | 12-05-2014 | JP 6135971 B2 | 31-05-2017 |
| | | JP 2014085309 A | 12-05-2014 |
| JP 2016222827 A | 28-12-2016 | NONE | |



For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009002594 A
- JP 2014085309 A


### Non-patent literature cited in the description


- *Macromolecules*, 2020, vol. 53, 11166-11177
- *Akita Prefectural University Web Journal B*, 2019, vol. 6, 216-222
- *According to Macromolecules, (US)*, 2020, vol. 53, 11166-11177
- **SAALWACHTER et al.** *Journal of Chemical Physics*, vol. 119 (6), 3468-3482